# EUROPÄISCHE PATENTANMELDUNG

(11) **EP 1 584 833 A2**
(43) Veröffentlichungstag der Anmeldung: **12.10.2005**
(21) Anmeldenummer: 05100858.9
(22) Anmeldetag: 08.02.2005
(51) Int. Cl.: F16D 55/226, F16D 55/00

(54) **Elektromechanische Scheibenbremse**

(30) Priorität: 08.04.2004 DE 102004017383
(71) Anmelder: ROBERT BOSCH GMBH, 70442 Stuttgart (DE)
(72) Erfinder: Baumann, Dietmar, 71282, Hemmingen (DE); Hofmann, Dirk, 71636, Ludwigsburg (DE); Vollert, Herbert, 71665, Vaihingen/Enz (DE); Nagel, Willi, 71686, Remseck/Hochdorf (DE); Henke, Andreas, 34474, Diemelstadt (DE); Foitzik, Bertram, 71636, Ludwigsburg (DE); Goetzelmann, Bernd, 71696, Moeglingen (DE)

(57) **Zusammenfassung**

Die Erfindung betrifft eine elektromechanische Scheibenbremse (10) mit einem als Schwimmsattel ausgebildeten Bremssattel (12). Die Erfindung schlägt vor, Schiebeführungen (22) zur quer verschieblichen Führung des Bremssattels (12) innerhalb einer Bremsscheibe (16) anzuordnen. Die Erfindung ermöglicht eine Bremsscheibe (16) mit größerem Durchmesser, wodurch beim Bremsen auftretende Kräfte kleiner sind. Insbesondere die Schiebeführung (22) und deren Halterung werden geringer beansprucht.

## Beschreibung

### Stand der Technik

Die Erfindung betrifft eine elektromechanische Scheibenbremse mit den Merkmalen des Oberbegriffs des Anspruchs 1.

Derartige Scheibenbremsen sind in einer Vielzahl unterschiedlicher Ausführungsformen an sich bekannt. Sie weisen eine Betätigungseinrichtung mit üblicherweise einem Elektromotor und einem Rotations/Translations-Umsetzungsgetriebe auf, mit dem ein Reibbremsbelag zum Bremsen gegen eine Bremsscheibe drückbar ist. Das Rotations/Translations-Getriebe setzt eine rotatorische Antriebsbewegung des Elektromotors in eine translatorische Bewegung zum Andrücken des Reibbremsbelags gegen die Bremsscheibe um. Das Rotations/Translations-Getriebe weist vielfach einen Gewindetrieb auf, für den wiederum ein große Anzahl unterschiedlicher Konstruktionen wie Spindeltrieb, Rollengewindetrieb und dgl. mehr möglich sind. Statt eines Gewindetriebs ist beispielsweise auch ein Nocken zum Umsetzen der Rotationsbewegung des Elektromotors in eine Translationsbewegung zum Andrücken des Reibbremsbelags gegen die Bremsscheibe möglich. Dem Elektromotor und dem Rotations/Translations-Umsetzungsgetriebe kann ein Untersetzungsgetriebe zwischengeschaltet sein.

Bei elektromechanischen Scheibenbremsen ist es üblich, nur eine Betätigungseinrichtung vorzusehen, mit der ein Reibbremsbelag gegen eine Seite einer Bremsscheibe drückbar ist. Ein auf einer gegenüberliegenden Seite der Bremsscheibe angeordneter Reibbremsbelag wird, wie es von hydraulischen Scheibenbremsen bekannt ist, beim Bremsen über einen Schwimmsattel gegen die andere Seite der Bremsscheibe gedrückt. Der Schwimmsattel ist mit einer Schiebeführung quer zur Bremsscheibe verschiebbar geführt, er wird beim Drücken des einen Reibbremsbelags gegen die Bremsscheibe quer zur Bremsscheibe verschoben und drückt dadurch den anderen Reibbremsbelag gegen die andere Seite der Bremsscheibe. Die Betätigungseinrichtung ist am bzw. im Bremssattel angeordnet.

### Erläuterung und Vorteile der Erfindung

Bei der erfindungsgemäßen elektromechanischen Scheibenbremse mit den Merkmalen des Anspruchs 1 ist die Schiebeführung, mit der der Bremssattel quer zur Bremsscheibe verschiebbar geführt ist, radial innerhalb einer Reibfläche der Bremsscheibe angeordnet. Mit Reibfläche ist eine Kreisringfläche der Bremsscheibe gemeint, die der Reibbremsbelag berührt, wenn er zum Bremsen gegen die Bremsscheibe gedrückt wird und sich die Bremsscheibe dreht. Die Bremsscheibe hat üblicherweise auf beiden Seiten Reibflächen. Der Erfindung liegt der Gedanke zugrunde, die Schiebeführung des Bremssattels, die bei herkömmlichen Scheibenbremsen außerhalb eines Umfangs der Bremsscheibe angeordnet ist, nach innen, d. h. näher zu einer gedachten Drehachse der Bremsscheibe hin zu verlegen. Das bringt mehrere Vorteile mit sich: Bei einem vorgegebenen Innenradius einer Felge eines Fahrzeugrads, in der die Scheibenbremse unterzubringen ist, lässt sich eine Bremsscheibe mit größerem Durchmesser verwenden, weil sich die Schiebeführung nicht zwischen dem Außenrand der Bremsscheibe und der Felge befindet. Um eine bestimmte Bremskraft zu erzeugen genügt eine kleinere Andruckkraft der Reibbremsbeläge gegen die Bremsscheibe, die Betätigungskraft der Scheibenbremse ist dadurch verringert, was insbesondere bei elektromechanischen Scheibenbremsen, bei denen die Andruckkraft des Reibbremsbelags gegen die Bremsscheibe ein limitierender Faktor ist, ein nicht zu unterschätzender Vorteil ist. Zugleich kann eine Breite der Reibfläche der Bremsscheibe verringert werden, was geringere Reibradiusschwankungen zur Folge hat. Des Weiteren kann die Bremsscheibe bei verringerter Breite ihrer Reibfläche insgesamt kleiner und damit leichter werden und innerhalb der Bremsscheibe steht ein größerer Bauraum für die Scheibenbremse, ein Radlager und dgl. zur Verfügung. Weiterer Vorteil der Verlegung der Schiebeführung des Bremssattels nach innen ist ein verkürzter wirksamer Hebelarm zur Abstützung des Bremssattels der Scheibenbremse gegen die beim Bremsen in Umfangsrichtung der Bremsscheibe wirkende Brems-oder Reibkraft. Die eine Beanspruchung der Schiebeführung und einer Halterung des Bremssattels, die üblicherweise als Bremsenhalter bezeichnet wird, verringert sich entsprechend.

Die Unteransprüche haben vorteilhafte Ausgestaltungen und Weiterbildungen der im Anspruch 1 angegebenen Erfindung zum Gegenstand.

Gemäß Anspruch 2 ist die Schiebeführung eine Bolzenführung, wobei Anspruch 3 umgekehrt wie bei üblichen Scheibenbremsen vorsieht, dass eine Führungshülse der Bolzenführung fest und der Bolzen in der Führungshülse verschiebbar schwimmend ist. Die Führungshülse ist also beispielsweise fest am Bremsenhalter angeordnet und der Bolzen, an dem der Schwimmsattel befestigt ist, ist in der Führungshülse quer zur Bremsscheibe verschiebbar. Diese Ausgestaltung ermöglicht eine Bauraumeinsparung. Weiterer Vorteil ist, dass sich ein in die Führungshülse eingesetztes Gleitlager nicht mit dem Schwimmsattel quer zur Bremsscheibe verschiebt. Eine Abstützung des Bremssattels gegen die Brems- und Reibungskraft erfolgt somit immer in derselben Ebene in Bezug auf die Bremsscheibe und vorzugsweise in einer Ebene mit der Bremsscheibe (Anspruch 4). Die Abstützung des Bremssattels gegen die Bremskraft ist dadurch momentenfrei.

Anspruch 5 sieht vor, dass der Bremsenhalter der Scheibenbremse zugleich auch ein Radträger ist. Dabei ist der Bremsenhalter eine Halterung, die den Bremssattel über die Schiebeführung hält, am Radträger ist ein Fahrzeugrad drehbar gelagert. Diese Ausgestaltung der Erfindung spart ein Bauteil und außerdem den Bauraum für dieses Bauteil ein. Des Weiteren entfällt die Verbindung zwischen Bremsenhalter und Radträger, die üblicherweise miteinander verschraubt sind, mit dem Vorteil, dass die Befestigung der Scheibenbremse stabiler als über eine Schraubverbindung ist. Weiterer Vorteil sind weniger Kettentoleranzen, die Scheibenbremse ist genauer in Bezug zur Bremsscheibe positioniert. Diese Ausgestaltung kann gemeinsam mit anderen Merkmalen oder auch unabhängig bei Ausführungsformen der Erfindung verwirklicht sein.

Anspruch 8 sieht eine statisch bestimmte Halterung des Bremssattels mit der Schiebeführung vor. Übliche Scheibenbremsen haben zwei mit Abstand voneinander angeordnete Schiebeführungen. Herstellungstoleranzen und unterschiedliche Wärmedehnungen verursachen mechanische Spannungen. Anspruch 8 sieht vor, dass nur eine der beiden Schiebeführungen den Bremssattel quer zur Bremsscheibe verschiebbar führt und radial und in Umfangsrichtung zur Bremsscheibe fixieren, wogegen die andere Schiebeführung den Bremssattel quer zur Bremsscheibe verschiebbar führt, den Bremssattel radial zur Bremsscheibe fixiert und Spiel in Umfangsrichtung zum Bremssattel aufweist. Herstellungstoleranzen und unterschiedliche Temperaturdehnungen werden dadurch ausgeglichen.

Die Erfindung ist insbesondere für eine selbstverstärkende elektromechanische Scheibenbremse vorgesehen, die eine Selbstverstärkungseinrichtung aufweist, welche eine beim Bremsen von der drehenden Bremsscheibe auf den oder die Reibbremsbeläge ausgeübte Reibungskraft in eine Andruckkraft wandelt, die den/die Reibbremsbeläge zusätzlich zu einer von der Betätigungseinrichtung ausgeübten Andruckkraft gegen die Bremsscheibe drückt. Derartige Selbstverstärkungseinrichtungen mit Keil-, Rampen- oder Hebelmechanismen zum Wandeln der von der drehenden Bremsscheibe auf den/die gegen sie gedrückten Reibbremsbeläge ausgeübten Reibungskraft in eine Andruckkraft sind an sich bekannt und brauchen deswegen an dieser Stelle nicht erläutert zu werden.

### Zeichnung

Die Erfindung wird nachfolgend anhand eines in der Zeichnung dargestellten Ausführungsbeispiels näher erläutert. Es zeigen:
- Figur 1: einen Schnitt einer erfindungsgemäßen Scheibenbremse gemäß Linie I-I in Figur 2,
- Figur 2: eine Ansicht der Scheibenbremse aus Figur 1 in Richtung des Pfeils II in Figur 1; und
- Figur 3: einen Detailschnitt gemäß Linie III-III in Figur 1.

### Beschreibung des Ausführungsbeispiels

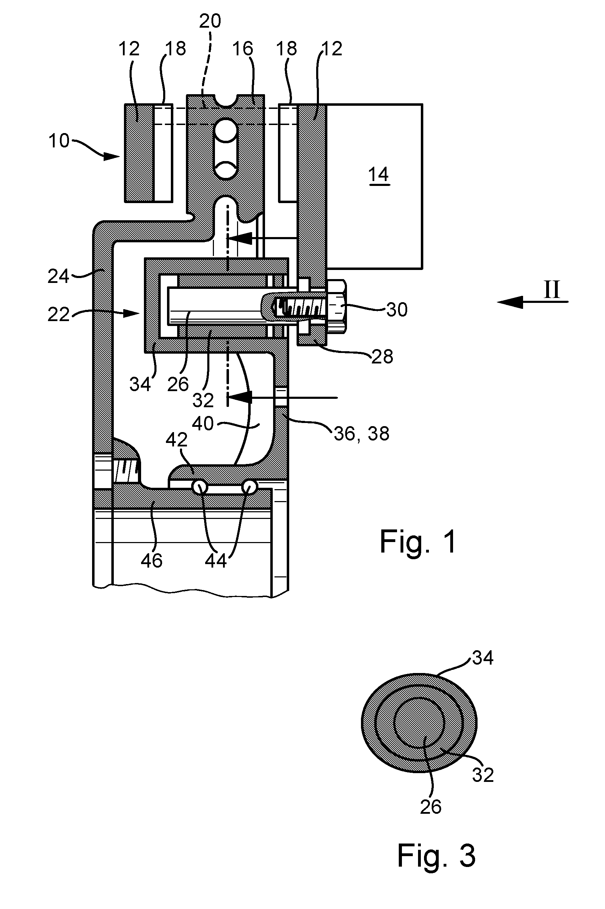

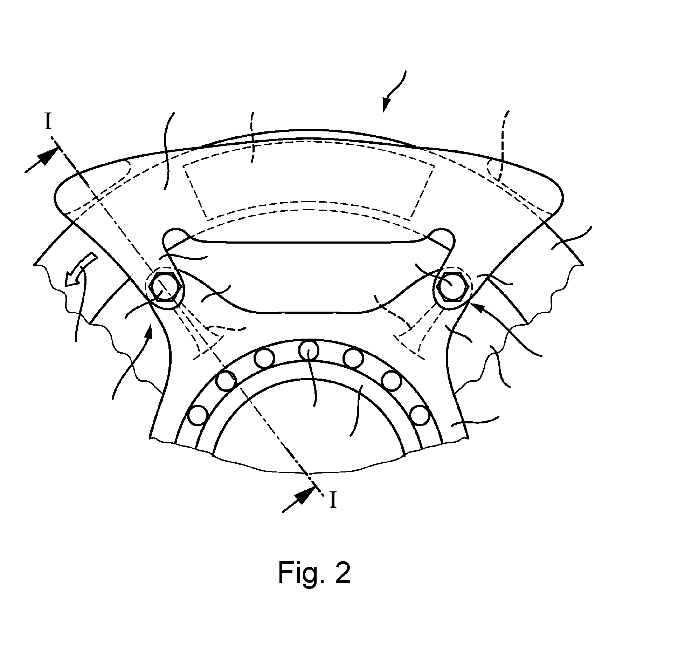

Die in Figuren 1 und 2 dargestellte, erfindungsgemäße elektromechanische Scheibenbremse 10 weist einen Bremssattel 12 mit einem Gehäuse 14 auf einer Seite einer Bremsscheibe 16 auf. Im Gehäuse 14 ist eine in der Zeichnung nicht sichtbare elektromechanische Betätigungseinrichtung mit einem Elektromotor, einem Untersetzungsgetriebe und einem Rotations/Translations-Umsetzungsgetriebe untergebracht, mit der beiderseits der Bremsscheibe 16 im Bremssattel 12 angeordnete Reibbremsbeläge 18 gegen die Bremsscheibe 16 drückbar sind.

Des Weiteren ist ein Keil- oder Rampenmechanismus als Selbstverstärkungseinrichtung im Gehäuse 14 untergebracht, die eine beim Bremsen von der drehenden Bremsscheibe 16 auf die gegen sie gedrückten Reibbremsbeläge 18 ausgeübte Reibungskraft in eine Andruckkraft wandelt, die die Reibbremsbeläge 18 zusätzlich zu einer von der Betätigungseinrichtung aufgebrachten Andruckkraft gegen die Bremsscheibe 16 drückt. Die Scheibenbremse 10 ist somit selbstverstärkend. Elektromechanische Betätigungseinrichtungen und Selbstverstärkungseinrichtungen sind an sich bekannt und sollen deswegen an dieser Stelle nicht näher beschrieben werden.

Der Bremssattel 12 ist als sog. Rahmensattel ausgebildet, seine beiderseits der Bremsscheibe 16 befindlichen Teile sind durch Anker 20 starr miteinander verbunden, die quer zur Bremsscheibe 16 und außerhalb ihres Umfangs angeordnet sind. Die Lage der Anker 20 ist in Figuren 1 und 2 mit Strichlinien dargestellt.

Der Bremssattel 12 ist als Schwimmsattel ausgebildet, d. h. er ist quer zur Bremsscheibe 16 verschieblich. Durch Drücken eines der beiden Reibbremsbeläge 18 gegen eine Seite der Bremsscheibe 16 wird der Bremssattel 12 quer zur Bremsscheibe 16 verschoben und drückt den anderen Reibbremsbelag 18 gegen die andere, gegenüberliegende Seite der Bremsscheibe 16, die Bremsscheibe 16 wird mit beiden Reibbremsbelägen 18 gebremst. Zur quer verschieblichen Führung des Bremssattels 12 weist die Scheibenbremse 10 zwei Schiebeführungen 22 auf, die als Bolzenführungen ausgeführt sind. Die beiden Schiebeführungen 22 sind innerhalb von Reibflächen der Bremsscheibe 16 angeordnet, wobei unter Reibflächen die kreisringscheibenförmigen Flächen der Bremsscheibe 16 zu verstehen sind, die beim Andrücken der Reibbremsbeläge 18 gegen die Bremsscheibe 16 und bei drehender Bremsscheibe 16 von den Reibbremsbelägen 18 berührt werden. Vereinfacht ausgedrückt sind die Reibflächen die von den Reibbremsbelägen 18 überstrichenen Flächen der drehenden Bremsscheibe 16.

Die Schiebeführungen 22 sind in einer topfförmigen Nabe 24 der Bremsscheibe 16 angeordnet, die als Bolzenführungen ausgebildeten Schiebeführungen 22 weisen jeweils einen Bolzen 26 auf, die in Ausnehmungen an in Bezug auf die Bremsscheibe 16 radial nach innen stehende Laschen 28 des Bremssattels 12 eingesetzt und mit Schrauben 30 befestigt sind. Die Befestigung der Bolzen 26 an den Laschen 28 des Bremssattels 12 ist auch in anderer Weise beispielsweise durch Einpressen, Schweißen, einstückige Ausbildung möglich. Die Bolzen 26 sind mit einer rohrförmigen Hülse, die ein Gleitlager 32 der Schiebeführungen 22 bildet, in Führungshülsen 34 verschiebbar geführt. Die Bolzen 26 sind quer und damit achsparallel zur Bremsscheibe 16 angeordnet. Die Führungshülsen 34 sind an Armen 36 eines Bremsenhalters und Radträgers 38 angeordnet. Die Führungshülsen 34 können beispielsweise einstückig mit dem Bremsenhalter und Radträger 38 sein oder beispielsweise durch Schweißen oder Verschrauben mit den Armen 36 des Bremsenhalters und Radträgers 38 verbunden sein. Die Arme 36 stehen in etwa radial nach außen vom Bremsenhalter und Radträger 38 ab. Die Arme 36 sind durch Versteifungsrippen 40 insbesondere gegen Biegung quer zur Bremsscheibe 16 und gegen Torsion versteift. Sofern ein Außenring 42 eines Radlagers 44 einen größeren Durchmesser als in der Zeichnung dargestellt oder die Führungshülsen 34 radial weiter innen angeordnet sind, können die Arme 36 entfallen und die Führungshülsen 34 wie Augen direkt auf dem Außenring 42 des Radlagers 44 angeordnet sein (nicht dargestellt).

Der Bremsenhalter und Radträger 38 ist in an sich bekannter Weise mit einem nicht dargestellten Achsschenkel oder dgl. eines Kraftwagens verbunden, beispielsweise verschraubt. Zum Verschrauben sind Durchstecklöcher 41 im Bremsenhalter und Radträger 38 angebracht. Der Bremsenhalter und Radträger 38 weist den Außenring 42 (Lagerschale) des doppelreihigen Radlagers 44 auf, mit dem eine Radnabe 46 drehbar gelagert ist. An der Radnabe 46 ist die Bremsscheibe 16 befestigt und ein nicht dargestelltes Fahrzeugrad in an sich bekannter Weise befestigbar.

Der Bremsenhalter und Radträger 38 hält sowohl die Scheibenbremse 10 als auch das drehbar an ihm gelagerte, nicht dargestellte Fahrzeugrad. Bekannte Scheibenbremsen weisen einen eigenen Bremsenhalter auf, der an einen separaten Radträger angeschraubt wird. Die Vereinigung von Bremsenhalter und Radträger 38 zu einem Teil spart demgegenüber ein Teil sowie die Verbindung der beiden Teile ein.

Die Anordnung der Schiebeführungen 22 innerhalb der Bremsscheibe 16 hat den Vorteil, dass eine Bremsscheibe 16 mit größerem Durchmesser in einer vorgegebenen Radfelge untergebracht werden kann. Dies hat den Vorteil geringerer Kräfte beim Bremsen, insbesondere werden die Schiebeführungen 22 und die sie haltenden Arme 36 des Bremsenhalters und Radträgers 38 weniger stark beansprucht. Umgekehrt wie bei bekannten Scheibenbremsen ist bei der erfindungsgemäßen Scheibenbremse 10 der Bolzen 26 quer zur Bremsscheibe 16 verschieblich (schwimmend) und die Führungshülse 34 ist feststehend. Dies hat den Vorteil, dass sich das Gleitlager 32 beim Bremsen und auch bei zunehmender Abnutzung der Reibbremsbeläge 18 nicht quer zur Bremsscheibe 16 verschiebt, die Abstützung des Bremssattels 12 erfolgt somit immer in einer Ebene mit der Bremsscheibe 16 und damit momentenfrei. Die Schiebeführungen 22 sind in einer Ebene mit der Bremsscheibe 16 angeordnet.

Einer der beiden Bolzen 26 der Schiebeführungen 22 ist wie üblich nur in axialer Richtung der Führungshülse 34 und damit quer zur Bremsscheibe 16 verschieblich. In radialer- und in Umfangsrichtung zur Bremsscheibe 16 ist der eine Bolzen 26 unbeweglich. Die Führungshülse 34 des anderen Bolzens 26 ist wie in Figur 3 zu sehen beispielsweise oval, wobei eine gedachte lange Halbachse der Führungshülse in Umfangsrichtung der Bremsscheibe 16 verläuft. Der Bolzen 26 ist dadurch nicht nur quer sondern auch in Umfangsrichtung zur Bremsscheibe 16 verschieblich und hält den Bremssattel 12 ausschließlich in radialer Richtung zur Bremsscheibe 16 fixiert. Auf diese Weise werden Toleranzen und unterschiedliche Temperaturdehnungen ausgeglichen. Es genügt ein kleines Spiel des Bolzens 26 in der Führungshülse 34 in Umfangsrichtung der Bremsscheibe 16 zum Toleranz- und Dehnungsausgleich. Das Gleitlager 32 stützt den Bolzen 26 dämpfend in der Führungshülse 34 ab. Es wird vorzugsweise derjenige Bolzen 26 in Umfangsrichtung der Bremsscheibe 16 bewegbar ausgeführt, der in einer Hauptdrehrichtung (Vorwärtsfahrt) der Bremsscheibe 16 hinten angeordnet ist. Bei der in Figur 2 mit Pfeil 52 dargestellten Hauptdrehrichtung der Bremsscheibe 16 weist der links dargestellte Bolzen 26 die Bewegungsmöglichkeit in Umfangsrichtung auf und der rechts dargestellte Bolzen 26, der sich in Drehrichtung der Bremsscheibe 16 vorn befindet, ist unbeweglich. Dadurch wird der Bremssattel 12 beim Bremsen auf Zug beansprucht, was üblicherweise günstiger als eine Beanspruchung auf Druck ist.

## Patentansprüche

1. Elektromechanische Scheibenbremse, mit einem als Schwimmsattel ausgebildeten Bremssattel, der eine Betätigungseinrichtung aufweist, mit der ein Reibbremsbelag zum Bremsen gegen eine Bremsscheibe drückbar ist, und mit einer Schiebeführung, mit der der Bremssattel quer zur Bremsscheibe verschiebbar geführt ist, **dadurch gekennzeichnet, dass** die Schiebeführung (22) radial innerhalb einer Reibfläche der Bremsscheibe (16) angeordnet ist.

2. Scheibenbremse nach Anspruch 1, **dadurch gekennzeichnet, dass** die Schiebeführung (22) eine Bolzenführung aufweist.

3. Scheibenbremse nach Anspruch 2, **dadurch gekennzeichnet, dass** eine Führungshülse (34) der Bolzenführung fest und der Bolzen (26) mit dem Schwimmsattel (12) verschiebbar (schwimmend) ist.

4. Scheibenbremse nach Anspruch 1, **dadurch gekennzeichnet, dass** die Schiebeführung (22) in einer Ebene mit den Reibflächen der Bremsscheibe (16) angeordnet ist.

5. Scheibenbremse nach Anspruch 1, **dadurch gekennzeichnet, dass** die Scheibenbremse (10) einen Bremsenhalter (38) aufweist, der zugleich auch Radträger (38) ist.

6. Scheibenbremse nach Anspruch 1, **dadurch gekennzeichnet, dass** die Scheibenbremse (10) einen Bremsenhalter (38) aufweist, der Versteifungsrippen (40) aufweist, die den Bremsenhalter (38) gegen Querbeanspruchungen und/oder Verwindung versteifen.

7. Scheibenbremse nach Anspruch 6, **dadurch gekennzeichnet, dass** der Bremsenhalter (38) Arme (36) aufweist, an denen die Schiebeführung (22) für den Schwimmsattel (12) angeordnet ist, und dass die Arme (36) die Versteifungsrippen (40) aufweisen.

8. Scheibenbremse nach Anspruch 1, **dadurch gekennzeichnet, dass** die Scheibenbremse (10) zwei Schiebeführungen (22) aufweist, mit denen der Bremssattel (12) quer zur Bremsscheibe (16) verschiebbar geführt ist, dass eine Schiebeführung (22) den Bremssattel (12) radial und in Umfangsrichtung zur Bremsscheibe (16) fixiert und dass die andere Schiebeführung (22) den Bremssattel (12) radial zur Bremsscheibe (16) fixiert und Spiel in Umfangsrichtung zur Bremsscheibe (16) aufweist.

9. Scheibenbremse nach Anspruch 8, **dadurch gekennzeichnet, dass** eine in einer Vorzugsdrehrichtung der Bremsscheibe (16) vordere Schiebeführung (22) den Bremssattel (12) radial und in Umfangsrichtung fixiert.

10. Scheibenbremse nach Anspruch 1, **dadurch gekennzeichnet, dass** die Scheibenbremse (10) eine Selbstverstärkungseinrichtung aufweist.
